# EUROPÄISCHE PATENTANMELDUNG

(11) **EP 3 852 239 A1**
(43) Veröffentlichungstag der Anmeldung: **21.07.2021**
(21) Anmeldenummer: 21150918.7
(22) Anmeldetag: 11.01.2021
(51) Int. Cl.: H02K 1/18, H02K 5/22, H02K 7/14, H02K 11/33, H02K 3/52

(54) **BAUGRUPPE MIT ORTHOGONAL ZUR MONTAGERICHTUNG DER BAUGRUPPE MONTIERBAREN STECKERVERBINDER**

(30) Priorität: 16.01.2020 DE 102020100988
(71) Anmelder: EBM-PAPST ST. GEORGEN GMBH & CO. KG, 78112 St. Georgen (DE)
(72) Erfinder: GHODSI-KHAMENEH, Hassan, 78112 St. Georgen (DE); HIRT, Johannes, 78112 St. Georgen/Brigach (DE); WÖSSNER, Lars, 78647 Trossingen (DE); RATH, Frank, 78628 Rottweil (DE); DRESCHER, Claas, 78532 Tuttlingen (DE); BURI, Christoph, 78166 Donaueschingen (DE); HABERSTROH, Erhard, 78098 Triberg (DE); SCHNEIDER, Patrick, 78052 Villingen-Schwenningen (DE)
(74) Vertreter: Staeger & Sperling Partnerschaftsgesellschaft mbB

(57) **Zusammenfassung**

Die Erfindung betrifft eine Baugruppe (1) umfassend ein Gehäuse (10), einen Steckverbinder (20) und eine elektronische Unterbaugruppe (30), wobei das Gehäuse (10) ein Führungselement (11) und die elektronische Unterbaugruppe (30) ein dazu korrespondierende Gegenelement (31) aufweist und wobei das Führungselement (11) und das Gegenelement (31) eine Montagerichtung (X) bestimmen, entlang welcher die elektronische Unterbaugruppe (30) in das Gehäuse (10) verschiebbar ist, wobei der Steckverbinder (20) ein an dem Gehäuse (10) angeordnetes Steckverbindergehäuse (21) und zumindest ein an der elektronischen Unterbaugruppe (30) angeordnetes Kontaktelement (22) aufweist, wobei sich das zumindest eine an der elektronischen Unterbaugruppe (30) angeordnete Kontaktelement (22) orthogonal zu der Montagerichtung (X) erstreckt und das Steckverbindergehäuse (21) und/oder das Gehäuse (10) für jeweils ein an der elektronischen Unterbaugruppe (30) angeordnetes Kontaktelement (22) eine zumindest in die Montagerichtung (X) offene Ausnehmung (12, 23) aufweist, durch welche hindurch das jeweilige Kontaktelement (22) bei einer Verschiebung der elektronischen Unterbaugruppe (30) entlang der Montagerichtung (X) in eine in dem Steckverbindergehäuse (21) liegende Endposition verschiebbar ist.

## Beschreibung

Die Erfindung betrifft eine Baugruppe mit einem Gehäuse, einem mehrteiligen Steckverbinder und einer elektronischen Unterbaugruppe, wobei die Steckrichtung des Steckverbinders orthogonal zu einer Montagerichtung der Baugruppe ist und der mehrteilige Steckverbinder bei einer Montage der Unterbaugruppe in das Gehäuse entlang der Montagerichtung fügbar ist.

Aus dem Stand der Technik ist eine Vielzahl von Baugruppen mit Gehäusen, elektronischen Unterbaugruppen und Steckverbindern bekannt, bei welchen jedoch die Steckverbinder meist aufwändig mit den elektronischen Unterbaugruppen kontaktiert werden müssen, nachdem die elektronischen Unterbaugruppen in das zugehörige Gehäuse montiert wurden. Meist ist hierfür vorgesehen, zunächst die elektronische Unterbaugruppe in dem Gehäuse zu montieren, anschließend den Steckverbinder an dem Gehäuse zu fixieren und mit der elektronischen Unterbaugruppe elektrisch zu kontaktieren. Dies führt jedoch zum einen zu zusätzlichem Montageaufwand und zum anderen zu erhöhten Platzbedarf, da die Baugruppe auf eine bessere Zugänglichkeit für die Montage des Steckverbinders ausgelegt sein muss.

Alternativ ist im Stand der Technik bekannt, die Steckverbinder zunächst an der elektronischen Unterbaugruppe zu fixieren und zu kontaktieren und anschließend gemeinsam in das Gehäuse zu fügen. Hierbei ist jedoch problematisch, dass der Steckverbinder vorzugsweise zusätzlich mit dem Gehäuse verbunden werden muss, um eine hohe mechanische Belastbarkeit des Steckverbinder gewährleisten zu können und um die elektronische Unterbaugruppe von mechanischen Kräften frei zu halten. Dadurch ergibt sich ebenfalls ein vergleichsweise hoher Montageaufwand für die gesamte Baugruppe.

Ist der Steckverbinder ganz oder teilweise bereits an der elektronischen Unterbaugruppe fixiert und soll sich der Steckverbinder aus dem Gehäuse heraus erstrecken bzw. von außerhalb des Gehäuses zugänglich sein, ist zudem problematisch, dass zumeist die Montagerichtung der elektronischen Unterbaugruppe in das Gehäuse und die Steckrichtung des Steckverbinders parallel sein müssen.

Der Erfindung liegt deshalb die Aufgabe zugrunde, die vorgenannten Nachteile zu überwinden und eine Baugruppe mit einem Gehäuse, einem Steckverbinder und einer elektronischen Unterbaugruppe bereitzustellen, deren Steckverbinder sich zugleich bei der Montage der elektronischen Unterbaugruppe in dem Gehäuse und mit geringem Montageaufwand montieren lässt.

Diese Aufgabe wird durch die Merkmalskombination gemäß Patentanspruch 1 gelöst.

Erfindungsgemäß wird eine Baugruppe umfassend ein Gehäuse, einen Steckverbinder und eine elektronische Unterbaugruppe vorgeschlagen. Das Gehäuse weist zur leichteren Montage und Festlegung der Position der elektronischen Unterbaugruppe in dem Gehäuse ein Führungselement und die elektronische Unterbaugruppe ein dazu korrespondierende Gegenelement auf, wobei das Führungselement und das Gegenelement eine Montagerichtung bestimmen, entlang welcher die elektronische Unterbaugruppe in das Gehäuse verschiebbar ist. Folglich kann die elektronische Unterbaugruppe durch eine Verschiebung entlang der Montagerichtung in dem Gehäuse angeordnet werden, wobei die Unterbaugruppe dazu vorzugsweise bis auf eine beispielsweise durch einen Anschlag bestimmte Montageposition verschoben wird. Ferner ist erfindungsgemäß vorgesehen, dass der Steckverbinder ein an dem Gehäuse angeordnetes und vorzugsweise an diesem befestigtes Steckverbindergehäuse und zumindest ein an der elektronischen Unterbaugruppe angeordnetes Kontaktelement aufweist. Das zumindest eine an der elektronischen Unterbaugruppe angeordnete Kontaktelement erstreckt sich orthogonal zu der, Montagerichtung und bestimmt dadurch vorzugsweise zugleich die Steckrichtung des Steckverbinders, welche entsprechend orthogonal zu der Montagerichtung ist. Um ein Fügen des zumindest einen Kontaktelements des Steckverbinders in das Steckverbindergehäuse zu ermöglichen, ist ferner vorgesehen, dass das Steckverbindergehäuse und/oder das Gehäuse für jeweils ein an der elektronischen Unterbaugruppe angeordnetes Kontaktelement also für jedes an der elektronischen Unterbaugruppe angeordnete Kontaktelement jeweils eine zumindest in die Montagerichtung offene Ausnehmung aufweist, durch welche hindurch das jeweilige Kontaktelement bei einer Verschiebung der elektronischen Unterbaugruppe entlang der Montagerichtung in eine in dem Steckverbindergehäuse liegende Endposition des zumindest einen Kontaktelements verschiebbar ist.

Vorzugsweise wird die Endposition der Kontaktelemente bzw. des zumindest einen Kontaktelements in dem Steckverbindergehäuse dadurch bestimmt, dass die Kontaktelemente / das Kontaktelement vollständig in dem Steckverbindergehäuse oder einem in dem Steckverbindergehäuse bestimmten Aufnahmeraum angeordnet sind / ist und sich zugleich in der vorbestimmten Endposition befinden / befindet, in welcher ein zu dem Steckverbinder korrespondierendes Gegensteckelement entlang einer Steckrichtung in den Steckverbinder einsteckbar ist. Befindet sich das Kontaktelement bzw. die Kontaktelemente in ihrer Endposition ist vorzugsweise zugleich die elektronische Unterbaugruppe in ihrer Montageposition bzw. in ihrer Endposition in dem Gehäuse angeordnet.

In einer vorteilhaften Weiterbildung ist vorgesehen, dass die Baugruppe eine Ventilatorbaugruppe ist, die elektronische Unterbaugruppe einen Stator eines Elektromotors aufweist oder zumindest elektrisch kontaktiert und zumindest das Gehäuse die elektronische Unterbaugruppe und/oder den Elektromotor topfförmig umgibt. Insbesondere kann das Gehäuse hierbei ausgebildet sein, neben dem Stator zumindest einen Teil des Rotors aufzunehmen.

Um eine mechanische Stabilität des Steckverbinders zu erhöhen und um zugleich zu gewährleisten, dass mehrere nebeneinander angeordnete Kontaktelemente voneinander isoliert sind und bleiben, ist bei einer ebenfalls vorteilhaften Ausgestaltung der Baugruppe vorgesehen, dass der Steckverbinder zumindest zwei an der elektronischen Unterbaugruppe angeordnete Kontaktelemente aufweist, wobei zwischen den jeweiligen Ausnehmungen für jeweils ein Kontaktelement jeweils ein Steg ausgebildet ist, der die Ausnehmungen trennt. Der jeweilige Steg ist abhängig davon, ob das Steckverbindergehäuse und/oder das Gehäuse die Ausnehmung aufweist, vorzugsweise durch das entsprechende Gehäuse oder beide Gehäuse ausgebildet. Durch die Ausnehmungen und die dazwischen angeordneten Stege sind die Ausnehmungen als sich vorzugsweise in Steckrichtung des Steckverbinders und zugleich in Montagerichtung durch das Steckverbindergehäuse erstreckende Spalten ausgebildet, wobei jeweils zwei Spalten durch einen dazwischen liegenden Steg voneinander getrennt sind, welcher sich wie die Ausnehmungen orthogonal zu der Montagerichtung erstreckt.

Bei einer Variante, welche die Stabilität des Steckverbinders erhöht und daher vorteilhaft ist, bildet das Steckverbindergehäuse einen bereits zuvor erwähnten Aufnahmeraum aus, in welchem das zumindest eine Kontaktelement in seiner Endposition angeordnet ist und welcher in eine Steckrichtung des Steckverbinders sowie durch die zumindest eine Ausnehmung offen ist. Der Aufnahmeraum ist zudem abschnittsweise in Umfangsrichtung um die Steckrichtung und vorzugsweise angrenzend zu der Öffnung in Steckrichtung vollständig geschlossen, so dass sich die Ausnehmungen nicht bis zu der Öffnung in Steckrichtung erstrecken. Die Öffnung in Steckrichtung liegt vorzugsweise auf einer von der elektronischen Unterbaugruppe weg weisenden Seite des Steckverbinders bzw. des Steckverbindergehäuses.

Das zumindest eine Kontaktelement ist vorzugsweise ein gewinkelter oder gerader Lötstift, welcher auch als Pin bezeichnet werden kann, wobei sicher der Lötstift zumindest abschnittsweise orthogonal zu der Montagerichtung erstreckt. Durch die Erstreckung des Lötstifts bzw. der Lötstifte orthogonal zu der Montagerichtung wird entsprechend zugleich die Steckrichtung des Steckverbinders bestimmt. Ist eine Vielzahl von Kontaktelementen vorgesehen, sind diese vorzugsweise als Stiftleiste bzw. als Platinensteckverbinder ausgebildet.

Vorzugsweise umfasst die elektronische Unterbaugruppe eine Leiterplatte mit Leiterbahnen, wobei das zumindest eine Kontaktelement mit einer Leiterbahn der Leiterplatte kontaktiert ist. Sind mehrere Kontaktelemente vorgesehen, sind diese vorzugsweise jeweils mit einer Leiterbahn kontaktiert, durch welche das jeweilige Kontaktelement mit weiteren elektronischen Bauteilen der elektronischen Unterbaugruppe und beispielsweise einem Stator elektrisch verbunden sind.

An der Leiterplatte sind zudem bei einer weiteren Variante Befestigungselemente vorgesehen, durch welche die elektronische Unterbaugruppe an dem Gehäuse fixierbar ist. Die Befestigungselemente können beispielsweise als Rasthaken oder Schrauben ausgebildet sein, welche in dafür jeweils vorgesehene und von dem Gehäuse bereitgestellte Gegenelemente eingreifen. Durch die Befestigungselemente an der elektronischen Unterbaugruppe ist zudem zugleich das zumindest eine Kontaktelement in seiner Endposition fixierbar, so dass die Befestigungselemente der elektronischen Unterbaugruppe zugleich die Kontaktelemente an dem Steckverbindergehäuse fixieren.

Vorteilhaft ist insbesondere eine Weiterbildung, bei welcher das Steckverbindergehäuse einstückig und zumindest abschnittsweise integral mit Gehäuse ausgebildet ist. Entsprechend kann das Steckverbindergehäuse und das Gehäuse einstückig gefertigt werden, wobei ebenfalls einstückig oder separat ein zusätzlicher Einsatz vorgesehen sein kann, welcher die Ausnehmungen bzw. die Stege ausbildet.

Um die Kontaktelemente an der elektronischen Unterbaugruppe zu stabilisieren und in einer vorbestimmten Position zueinander und/oder an der Unterbaugruppe zu halten, ist bei einer vorteilhaften Ausgestaltung der Erfindung ferner vorgesehen, dass der Steckverbinder ein Rahmenelement aufweist, in welchem das zumindest eine Kontaktelement aufgenommen ist und mit welchem das zumindest eine Kontaktelement an der elektronischen Unterbaugruppe und insbesondere an einer Leiterplatte der elektronischen Unterbaugruppe fixiert ist. Darüber hinaus liegt das Rahmenelement mit dem zumindest einen Kontaktelement in der Endposition an der jeweiligen Ausnehmung an und/oder erstreckt sich zumindest abschnittsweise, beispielsweise mit einem dafür ausgebildeten Vorsprung, in die Ausnehmung hinein.

Bei einer Variante, bei welcher sich das Rahmenelement insbesondere durch einen Vorsprung in die Ausnehmung hinein erstreckt, kann zum einen vorgesehen sein, dass das jeweilige Kontaktelement in seiner zugehörigen Ausnehmung durch den Vorsprung stabilisiert wird oder, dass der Vorsprung die Ausnehmung abschnittsweise verschließt, wodurch das Rahmenelement integral einen Deckel bildet, welcher die Ausnehmung bzw. die Ausnehmungen zumindest abschnittsweise abdeckt, so dass der Aufnahmeraum des Steckverbinders bzw. der Steckverbinder an sich von einem Innenraum des Gehäuses, in welchem die elektronische Unterbaugruppe aufgenommen ist, getrennt und vorzugsweise abgedichtet ist. Insbesondere kann hierdurch ein Deckel zur Abdeckung der Ausnehmung(en) in Steckrichtung bereitgestellt werden, wobei vorzugweise jede der Ausnehmungen durch den so gebildeten Deckel abgedeckt ist. Beispielsweise kann das Rahmenelement für jede Ausnehmung jeweils einen Vorsprung bilden, welcher sich jeweils in die zugehörige Ausnehmung hinein erstreckt und die Ausnehmung dadurch vollständig oder zumindest in Steckrichtung zu der elektronischen Unterbaugruppe hin verschließt. Alternativ kann das Rahmenelement auch mit einer ebenen Fläche die Ausnehmung oder die Ausnehmungen überlagern und unmittelbar an dem die Ausnehmungen bildenden Gehäuse anliegen und diese dadurch vollständig oder zumindest in Steckrichtung zu der elektronischen Unterbaugruppe hin verschließen. Vorteilhaft ist zudem, wenn der dadurch gebildete Deckel die Ausnehmung dicht und insbesondere Wasserdicht verschließt wobei hierfür an dem Deckel auch Dichtelemente vorgesehen sein können. Durch einen solchen Deckel, kann der Innenraum des Gehäuses oder zumindest ein Abschnitt des Innenraums des Gehäuses gegenüber der Umgebung und gegenüber dem Aufnahmeraum des Steckverbinders abgedichtet werden.

Ist ein Rahmenelement mit einem Vorsprung vorhanden, kann zudem vorgesehen sein, dass hierdurch eine Position der elektronischen Unterbaugruppe in Umfangsrichtung um die Montagerichtung festgelegt wird und die Ausrichtung der Unterbaugruppe gegenüber dem Gehäuse festgelegt ist. Hierzu ist bei dieser Variante vorgesehen, dass das Rahmenelement zumindest einen Vorsprung ausbildet, der sich in der Endposition des Kontaktelements in eine Ausnehmung erstreckt. Durch den Vorsprung und die Ausnehmung, in welche sich der Vorsprung hinein erstreckt ist eine Ausrichtung bzw. eine Verdrehung der elektronischen Unterbaugruppe gegenüber dem Gehäuse in Umfangsrichtung um die Montagerichtung bestimmt.

Alternativ hierzu kann auch vorgesehen sein, dass das Führungselement und das Gegenelement die Ausrichtung bzw. die Verdrehung der elektronischen Unterbaugruppe gegenüber dem Gehäuse in Umfangsrichtung um die Montagerichtung bestimmen. Hierfür können das Führungselement und das Gegenelement beispielsweise bezüglich ihrer Querschnittsformen jeweils eine zueinander korrespondierende Asymmetrie bzw. einen Vorsprung und eine dazu korrespondierende Nut aufweisen, so dass die elektronische Unterbaugruppe nur in einer bestimmten Orientierung entlang der Montagerichtung verschiebbar ist.

Darüber hinaus ist eine Weiterbildung von Vorteil, bei welcher der Steckverbinder radial zu der Montagerichtung und/oder in Montagerichtung über das Gehäuse hinausragt.

Ebenfalls vorteilhaft ist zudem eine Ausbildung der Baugruppe, bei welcher das zumindest eine Kontaktelement zumindest in seiner Endposition aus dem Gehäuse hinaus ragt.

Von dem erfindungsgemäßen Grundgedanken ist darüber hinaus nicht nur eine Ausbildungsform umfasst, bei welcher alle Kontaktelemente an der elektronischen Unterbaugruppe angeordnet sind, sondern beispielsweise auch eine Variante, bei welcher nur ein Teil der Kontaktelemente des Steckverbinders an der elektronischen Unterbaugruppe angeordnet sind.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1a - 1c: jeweils eine Ansicht einer ersten Variante einer erfindungsgemäßen Baugruppe;
- Fig. 2a - 2c: jeweils eine Ansicht einer zweiten Variante einer erfindungsgemäßen Baugruppe;
- Fig. 3a - 3b: jeweils eine Ansicht einer dritten Variante einer erfindungsgemäßen Baugruppe

Die Figuren sind beispielhaft schematisch. Gleiche Bezugszeichen in den Figuren weisen auf gleiche funktionale und/oder strukturelle Merkmale hin.

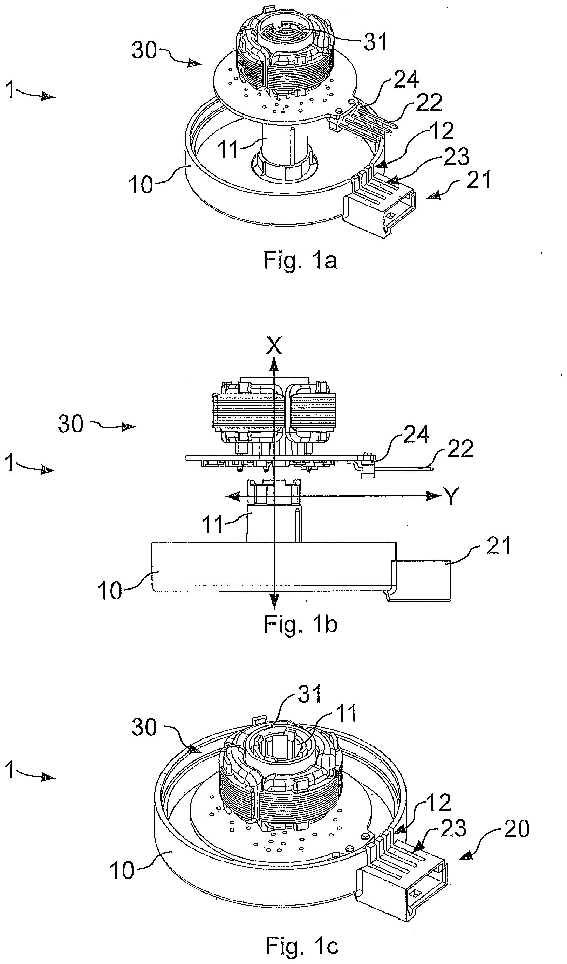

Die Figuren 1a bis 1c zeigen eine erste Variante einer erfindungsgemäßen Baugruppe in verschiedenen Ansichten. In Figur 1a und Figur 1b ist die Baugruppe 1 in einer demontierten bzw. explosionsartigen Ansicht dargestellt, bei welcher die elektronische Unterbaugruppe 30 mit den daran befestigten vier Kontaktelementen 22 noch nicht entlang dem Führungselement 11 in das Gehäuse 10 verschoben ist. Hierfür weist die elektronische Unterbaugruppe 30 ein rohrförmig ausgebildetes Gegenelement 31 auf, mit welchem es um das zapfen- bzw. zylinderförmig ausgebildete Führungselement 11 anordenbar und an dem Führungselement 11 entlang der Montagerichtung X in das Gehäuse 10 hinein verschiebbar ist.

Der Steckverbinder 20 umfasst ein einstückig mit dem Gehäuse 10 ausgebildetes Steckverbindergehäuse 21, ein Rahmenelement 24 sowie die vier in dem Rahmenelement 24 aufgenommenen und mit dem Rahmenelement 24 an der elektronischen Unterbaugruppe 30 fixierten Kontaktelemente 22. Neben einem Stator eines Elektromotors weist die elektronische Unterbaugruppe 30 eine Leiterplatte auf, an welcher das Rahmenelement 24 befestigt ist und mit dessen Leiterbahnen die Kontaktelemente 22 kontaktiert sind.

Wie insbesondere in Figur 1b gut zu erkennen, erstrecken sich die Kontaktelemente 22 in Steckrichtung Y bzw. orthogonal zu der Montagerichtung X aus dem Gehäuse 10 heraus.

Um bei der Montage bzw. der Verschiebung der elektronischen Unterbaugruppe 30 in das Gehäuse 10 zugleich auch den mehrteiligen Steckverbinder 20 montieren zu können, ohne hierfür zusätzliche Montageschritte vorsehen zu müssen, ist bei der dargestellten Variante vorgesehen, dass für jedes Kontaktelement 22 jeweils sowohl in dem Gehäuse 10 eine Ausnehmung 12 als auch in dem Steckverbindergehäuse 21 eine Ausnehmung 23 bzw. eine Ausnehmung mit einem ersten Abschnitt 12 und einem zweiten Abschnitt 23 vorgesehen ist. Entsprechend können die Kontaktelemente 22 bei einer Verschiebung der elektronischen Unterbaugruppe 30 entlang der Montagerichtung X durch die Ausnehmungen 12, 23 hindurch in den durch das Steckverbindergehäuse 21 gebildeten Aufnahmeraum verschoben werden, in welchem sie in der Endposition, wie sie in Figur 1c gezeigt ist, vollständig aufgenommen sind.

Daher ist es möglich, das Gehäuse 10 integral und einstückig mit dem Steckverbindergehäuse 21 beispielsweise im Spritzgussverfahren herzustellen und mit einer einzigen Montagebewegung bzw. mit einem einzigen Montageschritt mit der elektronischen Unterbaugruppe 30 zu Fügen, wobei dabei zugleich der Steckverbinder 20 montiert wird.

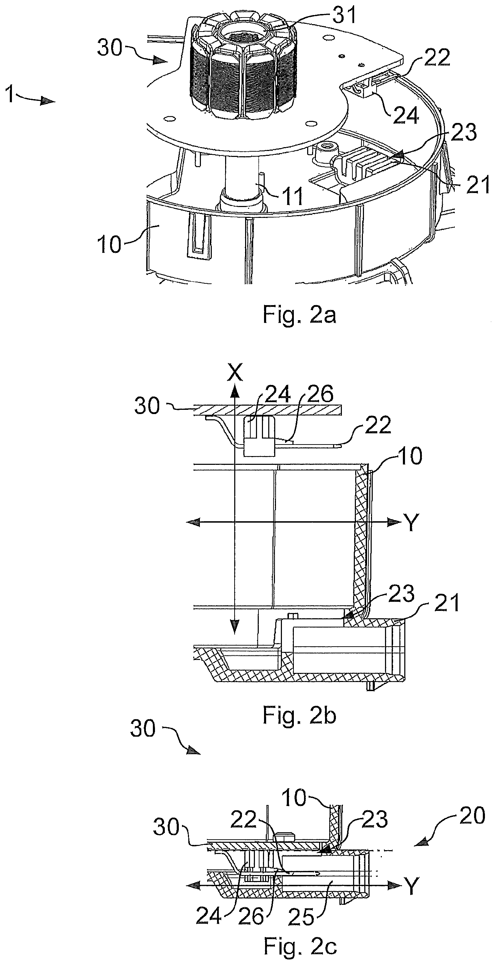

Die Figuren 2a bis 2c illustrieren eine alternative Ausführungsvariante, wobei die Figuren 2b und 2c jeweils einen Schnitt durch die Baugruppe 1 zeigen, welcher insbesondere durch den Steckverbinder 20 bzw. dessen Steckverbindergehäuse 21 verläuft. Der wesentliche Unterschied gegenüber der Variante aus den Figuren 1a bis 1c ist, dass der Steckverbinder 20 in Radialrichtung gegenüber dem zapfen- bzw. zylinderförmig ausgebildeten Führungselement 11 näher an dem Führungselement 11 ausgebildet ist, wodurch die Kontaktelemente 22 in Steckrichtung Y nicht über das Gehäuse 10 herausragen. Daher ist für ein jeweiliges Kontaktelement 22 jeweils eine in dem Steckverbindergehäuse 21 ausgebildete Ausnehmung vorgesehen, welche sich vollständig innerhalb des Gehäuses 10 erstreckt.

In dem in Figur 2c gezeigten Schnitt sind die Kontaktelemente 22 ihrer Endposition gezeigt, wobei die elektronische Unterbaugruppe 30 dabei ebenfalls in ihrer End- bzw. Montageposition ist. In dem Schnitt ist zudem der Aufnahmeraum 25 des Steckverbinders 20 erkennbar, in welchen hinein sich die Kontaktelemente 22 erstrecken.

Bei der Variante, wie sie in den Figuren 2a bis 2c dargestellt ist, bildet das Rahmenelement 24 zudem für jedes Kontaktelement 22 einen Vorsprung 26 aus, welcher sich entlang dem jeweiligen Kontaktelement 22 durch die jeweilige Ausnehmung 23 erstreckt und das jeweilige Kontaktelement 22 in die Montagerichtung X zusätzlich stützt, so dass jedes Kontaktelement 22 entlang der Montagerichtung X zu einer Seite hin durch das Steckverbindergehäuse 21 und zu der gegenüberliegenden Seite durch den jeweiligen Vorsprung 26 stabilisiert und gestützt ist.

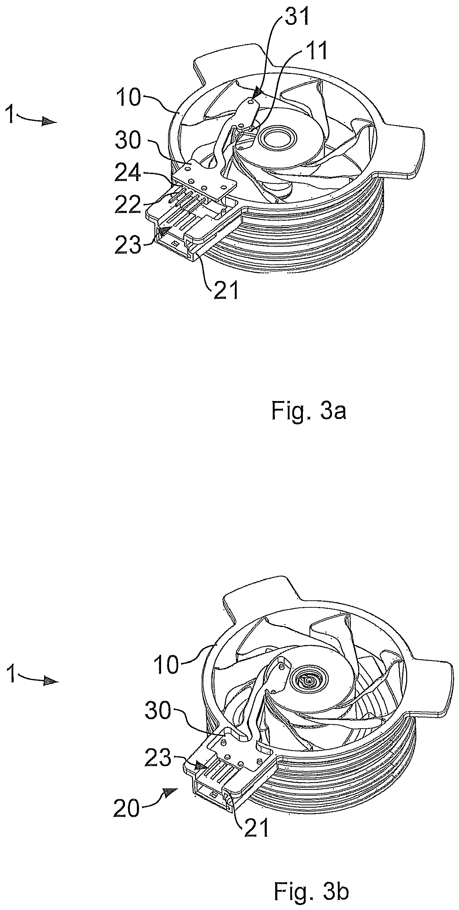

Die Figuren 3a und 3b zeigen eine weitere erfindungsgemäße Ausbildung, bei welcher das Gehäuse 10 als ein Außenring und als ein damit einstückig über Stege verbundener Innentopf ausgebildet ist, wobei die elektronische Unterbaugruppe 30 im Wesentlichen aus einer Leiterplatte mit daran ausgebildeten Leiterbahnen besteht, welche sich entlang einem der Stege von dem Innentopf zu dem Außenring erstreckt und dadurch den an dem Außenring angeordneten Steckverbinder 20 elektrisch mit dem Innentopf bzw. einer an dem Innentopf angeordneten weiteren elektrischen Unterbaugruppe kontaktiert.

Das Steckverbindergehäuse 21 ist wiederum einstückig mit dem Gehäuse 10 ausgebildet, wobei sich nicht nur die Kontaktelemente 22 über das Gehäuse 10 hinaus erstrecken, sondern der gesamte Steckverbinder 20 außerhalb des Gehäuses 10 angeordnet ist. Hierfür erstreckt sich in Abschnitt der elektronischen Unterbaugruppe 30 aus dem Gehäuse 10 heraus in den Steckverbinder 20 hinein.

## Patentansprüche

1. Baugruppe (1) umfassend ein Gehäuse (10), einen Steckverbinder (20) und eine elektronische Unterbaugruppe (30),
wobei das Gehäuse (10) ein Führungselement (11) und die elektronische Unterbaugruppe (30) ein dazu korrespondierende Gegenelement (31) aufweist
und wobei das Führungselement (11) und das Gegenelement (31) eine Montagerichtung (X) bestimmen, entlang welcher die elektronische Unterbaugruppe (30) in das Gehäuse (10) verschiebbar ist,
wobei der Steckverbinder (20) ein an dem Gehäuse (10) angeordnetes Steckverbindergehäuse (21) und zumindest ein an der elektronischen Unterbaugruppe (30) angeordnetes Kontaktelement (22) aufweist,
wobei sich das zumindest eine an der elektronischen Unterbaugruppe (30) angeordnete Kontaktelement (22) orthogonal zu der Montagerichtung (X) erstreckt und
das Steckverbindergehäuse (21) und/oder das Gehäuse (10) für jeweils ein an der elektronischen Unterbaugruppe (30) angeordnetes Kontaktelement (22) eine zumindest in die Montagerichtung (X) offene Ausnehmung (12, 23) aufweist, durch welche hindurch das jeweilige Kontaktelement (22) bei einer Verschiebung der elektronischen Unterbaugruppe (30) entlang der Montagerichtung (X) in eine in dem Steckverbindergehäuse (21) liegende Endposition verschiebbar ist.

2. Baugruppe nach Anspruch 1,
wobei die Baugruppe (1) eine Ventilatorbaugruppe ist, die elektronische Unterbaugruppe (30) einen Stator eines Elektromotors aufweist oder zumindest elektrisch kontaktiert und das Gehäuse (10) zumindest die elektronische Unterbaugruppe (30) und/oder den Elektromotor topfförmig umgibt.

3. Baugruppe nach Anspruch 1 oder 2,
wobei der Steckverbinder (20) zumindest zwei an der elektronischen Unterbaugruppe (30) angeordnete Kontaktelemente (22) aufweist und wobei zwischen den jeweiligen Ausnehmungen (12, 23) für jeweils ein Kontaktelement (22) jeweils ein Steg ausgebildet ist, der die Ausnehmungen (12, 23) trennt.

4. Baugruppe nach einem der vorhergehenden Ansprüche,
wobei das Steckverbindergehäuse (21) einen Aufnahmeraum ausbildet, in welchem das zumindest eine Kontaktelement (22) in seiner Endposition angeordnet ist und welcher in eine Steckrichtung (Y) des Steckverbinders (20) sowie durch die zumindest eine Ausnehmung (12, 23) offen ist,
und wobei der Aufnahmeraum abschnittsweise in Umfangsrichtung um die Steckrichtung (Y) vollständig geschlossen ist.

5. Baugruppe nach einem der vorhergehenden Ansprüche,
wobei das zumindest eine Kontaktelement (22) ein gewinkelter oder gerader Lötstift ist, welcher sich zumindest abschnittsweise orthogonal zu der Montagerichtung (X) erstreckt.

6. Baugruppe nach einem der vorhergehenden Ansprüche,
wobei die elektronische Unterbaugruppe (30) eine Leiterplatte mit Leiterbahnen umfasst und das zumindest eine Kontaktelement (22) mit einer Leiterbahn der Leiterplatte kontaktiert ist.

7. Baugruppe nach dem vorhergehenden Anspruch,
wobei an der Leiterplatte Befestigungselemente vorgesehen sind, durch welche die elektronische Unterbaugruppe (30) an dem Gehäuse (10) fixierbar ist.

8. Baugruppe nach einem der vorhergehenden Ansprüche,
wobei das Steckverbindergehäuse (21) einstückig und zumindest abschnittsweise integral mit Gehäuse (10) ausgebildet ist.

9. Baugruppe nach einem der vorhergehenden Ansprüche,
wobei der Steckverbinder (20) ein Rahmenelement (24) aufweist, in welchem das zumindest eine Kontaktelement aufgenommen ist und mit welchem das zumindest eine Kontaktelement (22) an der elektronischen Unterbaugruppe (30) fixiert ist,
wobei das Rahmenelement (24) mit dem zumindest einen Kontaktelement (22) in der Endposition an der jeweiligen Ausnehmung (12, 23) anliegt und/oder sich zumindest abschnittsweise in diese hinein erstreckt.

10. Baugruppe nach dem vorhergehenden Anspruch,
wobei das Rahmenelement (24) zumindest einen Vorsprung ausbildet, der sich in der Endposition des Kontaktelements (22) in eine Ausnehmung (12, 23) erstreckt,
und wobei durch den Vorsprung und die Ausnehmung (12, 23), in welche sich der Vorsprung hinein erstreckt, eine Ausrichtung der elektronischen Unterbaugruppe (30) gegenüber dem Gehäuse (10) in Umfangsrichtung um die Montagerichtung (X) bestimmt ist.

11. Baugruppe nach einem der vorhergehenden Ansprüche 1 bis 9,
wobei das Führungselement (11) und das Gegenelement (31) eine Ausrichtung der elektronischen Unterbaugruppe (30) gegenüber dem Gehäuse (10) in Umfangsrichtung um die Montagerichtung (X) bestimmen.

12. Baugruppe nach einem der vorhergehenden Ansprüche,
wobei das zumindest eine Kontaktelement (22) zumindest in seiner Endposition aus dem Gehäuse (10) hinaus ragt.
